# EUROPÄISCHE PATENTSCHRIFT

(11) **EP 1 793 707 B1**
(45) Veröffentlichungstag und Bekanntmachung des Hinweises auf die Patenterteilung: **29.10.2008**
(21) Anmeldenummer: 05777929.0
(22) Anmeldetag: 25.08.2005
(51) Int. Cl.: A47C 27/10

(54) **LIEGEVORRICHTUNG**
BED
DISPOSITIF DE COUCHAGE

(30) Priorität: 31.08.2004 DE 102004041996
(43) Veröffentlichungstag der Anmeldung: 13.06.2007
(60) Teilanmeldung: 08101504.2
(73) Patentinhaber: Friedrichs, Arno, D-95326 Kulmbach (DE)
(72) Erfinder: Friedrichs, Arno, D-95326 Kulmbach (DE)
(74) Vertreter: Eichstädt, Alfred
(86) Internationale Anmeldenummer: PCT/EP2005/054172
(87) Internationale Veröffentlichungsnummer: WO 2006/024624

(56) Entgegenhaltungen:
- US-A- 3 879 776
- US-A- 4 542 547
- US-A- 5 829 081
- US-A- 5 873 137

## Beschreibung

Die Erfindung betrifft eine Liegevorrichtung.

Es sind bereits Liegevorrichtungen bekannt, die aufblasbar sind. Eine einfache Form einer derartigen Liegevorrichtung ist eine Luftmatratze. Diese weist eine einzige oder mehrere Luftkammern auf, die jeweils über einen Luftanschluss mit Luft befüllbar sind, beispielsweise unter Verwendung eines Kompressors. Der jeweilige Luftanschluss wird nach dem Befüllen der jeweiligen Luftkammer mittels eines Stöpsels verschlossen.

Aus der DE 20 2004 000 701 U1 ist ein mit Druckluft befüllbares Liegepolster für ein Liegemöbel bekannt, wobei das Liegepolster über einen Kompressor mit Druckluft beaufschlagbar ist. Auf der Oberseite des Liegepolsters ist im Bereich der zu erwartenden Lordose des Schlafenden mindestens eine, vorzugsweise drei, zusätzliche, unabhängige Luftkammern vorgesehen. Die Luftkammern erstrecken sich über die gesamte Breite des Liegepolsters. Jede Luftkammer weist einen Anschluss für einen Kompressor auf, so dass jede Luftkammer einzeln mit Druckluft beaufschlagbar ist.

Aus der DE 696 11 490 T2 ist eine Matratze mit einer durch den Benutzer regulierbaren Festigkeit bekannt. Die Matratze besteht aus einem Kern mit einer Struktur aus einer gefütterten Schicht auf jeder Seite sowie einer gepolsterten Schicht auf ebenfalls jeder Seite. Mindestens eine der gefütterten Schichten ist ein retikularer Körper mit einem in der Regel prismatisch-rechteckigen Aufbau. Die Struktur basiert auf einem lamellengewandeten Körper, der durch mehrere querverlaufende Scheidungen unterteilt ist, die die nebeneinanderliegenden querverlaufenden versiegelten Luftkammern definieren. Jede Luftkammer kann einzeln aufgeblasen werden, so dass je nach dem Druck, mit dem die querverlaufenden Kammern des retikularen Körpers versehen wurden, dieser Körper verschiedene Festigkeiten aufweisen kann. Weiterhin ist eine Kompressoranlage vorgesehen, die durch ein Luftreservedepot unterstützt wird und die querverlaufenden Luftkammern über unabhängig und einzeln steuerbare Elektroventile mit Druck versorgt.

Aus der US-A-5829081 ist eine Liegevorrichtung bekannt, welche eine Matratze mit einer Vielzahl von gitterförmig angeordneten Luftkammern aufweist. Jede dieser Luftkammern ist mit einem Drucksensor versehen. Zur Steuerung des Druckes in jeder der Luftkammern ist eine Steuereinheit vorgesehen, die mit den Drucksensoren verbunden ist.

Aus der US-A-4542547 ist eine Liegevorrichtung bekannt, die eine Matratze mit einer Vielzahl von gitterförmig angeordneten Luftkammern aufweist, welche mit jeweils mindestens einem Luftanschluss versehen sind. Weiterhin weist die bekannte Liegevorrichtung eine Vielzahl von steuerbaren Ventilen auf, wobei jedes Ventil einer der Luftkammern zugeordnet ist. Ferner enthält die Liegevorrichtung eine Vielzahl von Sensoren und eine mit den Sensoren verbundene Steuereinheit, die die Ventile in Abhängigkeit von den Ausgangssignalen der Sensoren individuell steuert. Als Luftquelle für die bekannte Liegevorrichtung dient ein Kompressor.

Der Erfindung liegt die Aufgabe zugrunde, die Anpassung einer Liegevorrichtung an den Körper einer auf der Liegevorrichtung liegenden Person zu verbessern.

Diese Aufgabe wird durch eine Liegevorrichtung mit den im Anspruch 1 angegebenen Merkmalen gelöst. Vorteilhafte Ausgestaltungen und Weiterbildungen der Erfindung ergeben sich aus den abhängigen Ansprüchen.

Bei einer Liegevorrichtung mit den im Anspruch 1 angegebenen Merkmalen weist die Luftquelle einen von einem Linearmotor angetriebenen Kolben auf, der in einem Kolbengehäuse auf und ab bewegbar ist. Bei einer derart ausgestalteten Luftquelle erfolgt das Einbringen und Auslassen der Luft nahezu geräuschlos. Dazu trägt insbesondere auch bei, dass die Luftströmung nur sehr langsam läuft.

Eine Liegevorrichtung mit den erfindungsgemäßen Merkmalen weist des weiteren den Vorteil auf, dass die Befüllung der einzelnen Luftkammern sensorgesteuert durch eine Steuereinheit vorgenommen wird. Handelt es sich bei den Sensoren um Drucksensoren, dann kann erreicht werden, dass in jeder Luftkammer ein vorgegebener zulässiger Maximaldruck nicht überschritten wird. Dadurch ist sichergestellt, dass kein Platzen einer Luftkammer erfolgt, was mit unangenehmen Folgen für die auf der Matratze liegende Person verbunden sein könnte. Handelt es sich bei den Sensoren um Höhensensoren, dann kann die Luftzufuhr zu jeder der Luftkammern so eingestellt werden, dass die jeweilige Luftkammer eine gewünschte Höhe aufweist. Diese gewünschte Höhe ist vorzugsweise abhängig von einem eingestellten Matratzenprofil. Handelt es sich bei den Sensoren um Lagesensoren, dann kann das Matratzenprofil in Abhängigkeit von der detektierten Lage einer auf der Matratze liegenden Person verändert werden. Liegt beispielsweise die auf der Matratze liegende Person auf dem Bauch, dann kann das Matratzenprofil unter Verwendung von abgespeicherten, der Bauchlage zugeordneten Daten so verändert werden, dass die im Bauchbereich der Person positionierten Luftkammern mit mehr Luft gefüllt werden als die im Bereich des Kopfes und der Beine der Person positionierten Luftkammern, so dass die Person nicht in Hohlkreuzlage gerät. Liegt die auf der Matratze liegende Person hingegen auf der Seite, dann kann das Matratzenprofil unter Verwendung von abgespeicherten, der Seitenlage zugeordneten Daten so verändert werden, dass die Wirbelsäule der auf der Matratze liegenden Person gerade liegt. Liegt die auf der Matratze liegende Person auf dem Rücken, dann kann das Matratzenprofil unter Verwendung von abgespeicherten, der Rückenlage zugeordneten Daten so verändert werden, dass der Kopf erhöht zum Liegen kommt und der Bereich des Rückens etwas abgesenkt wird. Durch eine zusätzliche Auswertung der von den Drucksensoren gelieferten Signale kann dabei die Körpergröße, das Körpergewicht und die exakte Positionierung der auf der Matratze liegenden Person ebenfalls berücksichtigt werden.

Gemäß einer Ausgestaltung der Erfindung sind in einem Matratzenprofilspeicher Daten abgespeichert, die einem vorgegebenen Matratzenprofil entsprechen. Diese Daten können vom Benutzer mittels einer Bedieneinheit abgerufen und zur Einstellung eines gewünschten Matratzenprofils verwendet werden. Bei dieser Einstellung können zusätzlich die von den Sensoren gelieferten Signale berücksichtigt werden.

Besonders vorteilhaft ist es, eine vorprogrammierte Abfolge von Matratzenprofilen automatisch unter Steuerung durch die Steuereinheit nacheinander einzustellen. Dies hat zur Folge, dass die auf der Matratze liegende Person während des Schlafes des öfteren umgelagert wird, wobei der auf die einzelnen Körperstellen ausgeübte Druck variiert und die Wirbelsäule bewegt wird. Dadurch wird auch ein Wundliegen verhindert oder zumindest hinausgezögert.

Eine vorteilhafte Ausgestaltung der Luftkammern ist im Anspruch 12 angegeben. Sind die Luftkammern jeweils in Form eines Faltenbalges realisiert, dann begünstigt dies die Einstellung einer gewünschten Höhe und eines gewünschten Druckes in jeder der Luftkammern. Weiterhin können einander benachbarte Luftkammern in einfacher Weise durch einen Vulkanisiervorgang miteinander verbunden sein, wobei dieser Vulkanisiervorgang vorzugsweise im mittleren oder unteren Bereich der Luftkammern vorgenommen wird.

Eine vorteilhafte Weiterbildung der Erfindung besteht darin, den Prozessor mit einem Display zu verbinden und das Display zur Veranschaulichung von Matratzenprofilen zu verwenden. Der Benutzer kann dann bei Bedarf abgespeicherte Matratzenprofile nach seinen individuellen wünschen dahingehend modifizieren, dass das jeweilige Matratzenprofil besser an sein individuelles Empfinden angepasst ist.

Weist eine Liegevorrichtung einen Protokollspeicher auf, wie er Gegenstand des Anspruchs 14 ist, dann werden eingestellte Matratzenprofile abgespeichert. Der Benutzer hat die Möglichkeit, diese eingestellten Matratzenprofile im nachhinein auszuwerten und auf diese Weise Rückschlüsse auf sein Schlafverhalten zu ziehen.

Die im Protokollspeicher abgespeicherten Daten können auch vom Prozessor automatisch ausgewertet oder einem entfernt angeordneten Zentralprozessor über eine Online-Verbindung übermittelt werden. Letzteres ermöglicht es, auch in der Ferne eine Auswertung der Schlafgewohnheiten eines Schlafenden vorzunehmen und aus der Ferne eine Einstellung von geänderten Matratzenprofilen in die Wege zu leiten.

Weitere vorteilhafte Eigenschaften der Erfindung ergeben sich aus deren beispielhafter Erläuterung anhand der Figuren. Es zeigt
- Figur 1: eine schematische perspektivische Ansicht einer bei der erfindungsgemäßen Liegevorrichtung verwendeten Matratze,
- Figur 2: eine Darstellung zur Erläuterung der Funktionsweise einer Liegevorrichtung gemäß der Erfindung,
- Figur 3: eine schematische Ansicht zur Veranschaulichung einer bevorzugten Ausführungsform einer Luftkammer,
- Figur 4: eine weitere Darstellung zur Erläuterung der Funktionsweise einer Liegevorrichtung gemäß der Erfindung und
- Figur 5: Skizzen eines Ausführungsbeispiels zur Messung der Höhe einer Luftkammer.

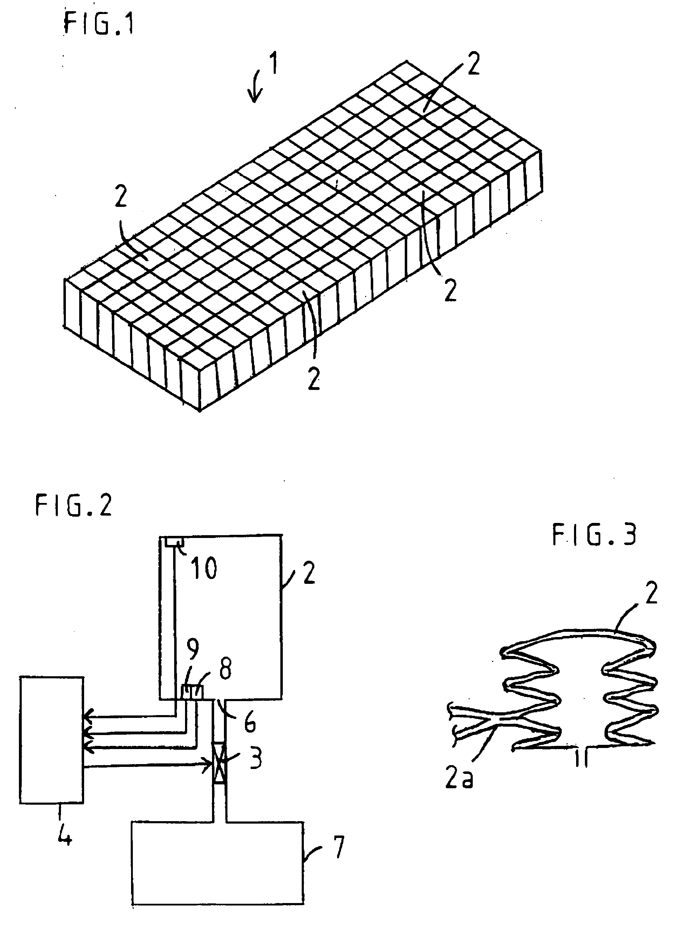

Die Figur 1 zeigt eine schematische perspektivische Ansicht einer bei der erfindungsgemäßen Liegevorrichtung verwendeten Matratze. Die dargestellte Matratze 1 weist eine Vielzahl von gitterförmig angeordneten Luftkammern 2 auf. Jede dieser Luftkammern hat eine quadratische, rechteckige oder runde Grundfläche. Bei einer quadratischen Grundfläche hat jede Luftkammer beispielsweise eine Länge und eine Breite im Bereich zwischen 4 und 10 cm. Die Höhe jeder Luftkammer kann in Abhängigkeit von der zugeführten Luftmenge beispielsweise im Bereich zwischen 6 und 12 cm eingestellt werden. Die gesamte Länge der Matratze beträgt beispielsweise 200 cm, ihre Breite 100 cm.

Jede der Luftkammern 2 der Matratze 1 kann individuell mit Luft bepumpt werden, so dass für jede einzelne der Luftkammern der dort herrschende Luftdruck und die Höhe individuell einstellbar sind. Dieses individuelle Bepumpen einer Luftkammer wird im Zusammenhang mit der Figur 2 veranschaulicht, die eine Darstellung zur Erläuterung der Funktionsweise einer Liegevorrichtung gemäß der Erfindung zeigt.

Die dort dargestellte Luftkammer 2 enthält einen Luftanschluss 6, der über ein Ventil 3 mit einer Druckluftquelle 7 verbunden ist. Das Ventil 3 wird geöffnet und geschlossen durch Steuersignale, die von einer Steuereinheit 4 zur Verfügung gestellt werden. Die Steuereinheit 4, die einen Prozessor aufweist, generiert die genannten Steuersignale in Abhängigkeit von ihr zugeführten Sensorausgangssignalen.

Die in der Figur 2 dargestellte Luftkammer 2 weist ebenso wie alle anderen Luftkammern der Matratze einen Drucksensor 8, einen Höhensensor 9 und einen Lagesensor 10 auf. Die Ausgangssignale der genannten Sensoren werden der Steuereinheit 4 zugeführt, von deren Prozessor ausgewertet und in ein Steuersignal für das Ventil 3 umgesetzt, wodurch das Ventil geöffnet oder geschlossen wird und damit durchlässig ist oder sperrt. Gegebenenfalls ist es auch möglich, mit weniger Lagesensoren auszukommen, um die Liegeposition der auf der Matratze liegenden Person zu detektieren. Dazu genügt möglicherweise ein einziger Lagesensor, der in einer der Luftkammern positioniert ist.

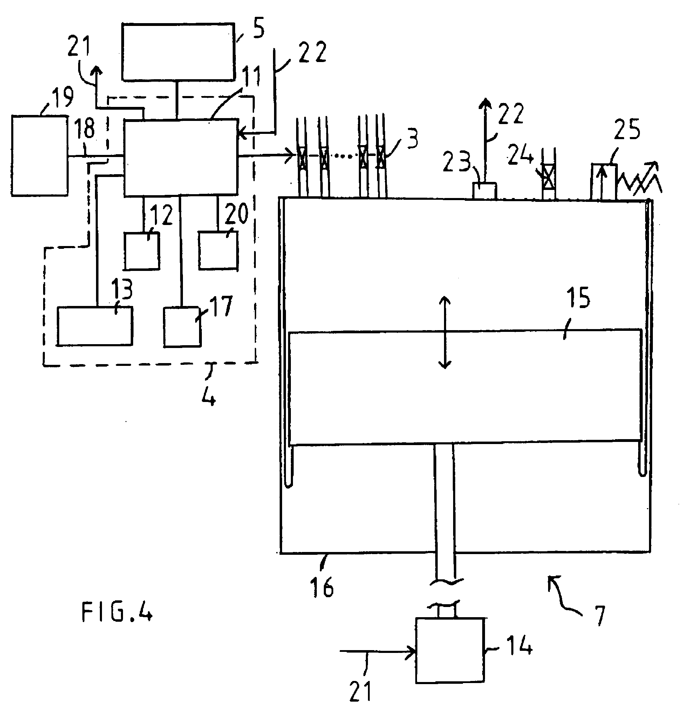

Durch eine Auswertung der vom Drucksensor 8 gelieferten Sensorsignale kann der in der jeweiligen Luftkammer herrschende Luftdruck dahingehend überwacht werden, ob er einem gewünschten Matratzenprofil entspricht oder nicht. Weiterhin kann durch eine Auswertung der Ausgangssignale des Drucksensors 8 der Luftdruck in der jeweiligen Luftkammer dahingehend überwacht werden, dass er einen vorgegebenen zulässige Maximaldruck nicht überschreitet. Dadurch ist sichergestellt, dass eine Luftkammer nicht in unerwünschter Weise platzen und die auf der Matratze liegende Person gefährden kann. Zusätzlich kann - um ein Platzen von Luftkammern der Matratze zu vermeiden - auch mittels eines mechanischen Überdruckventils 25 (siehe Figur 4) die Luft der Druckluftquelle 7 begrenzt werden, wobei das Überdruckventil beispielsweise in die Leitungsanschlussplatte für die Luftkammerzuleitungen integriert ist. Zusätzlich oder alternativ dazu kann auch ein von der Steuereinheit 4 angesteuertes elektrisches Sicherheitsventil 24 (siehe Figur 4) vorgesehen sein.

Durch eine Auswertung der vom Höhensensor 9 gelieferten Sensorsignale kann die Höhe der jeweiligen Luftkammer dahingehend überwacht werden, ob sie dem derzeit eingestellten Matratzenprofil entspricht oder angepasst werden muss. Die Höhenmessung erfolgt beispielsweise dadurch, dass auf der Unterseite der oberen Begrenzungswand der Luftkammer eine reflektierende Schicht aufgebracht wird und der Abstand der reflektierenden Schicht vom Höhensensor 9 erfasst wird.

Durch eine Auswertung der von den Lagesensoren 10 gelieferten Steuersignale kann ermittelt werden, ob die auf der Matratze liegende Person auf dem Bauch, auf dem Rücken oder auf der Seite liegt und ein der jeweiligen Liegeposition zugehöriges Matratzenprofil eingestellt werden. Zu dieser Lageermittlung sind beispielsweise im Bereich des oberen Randes der Schlafanzughose einer auf der Matratze schlafenden Person verschiedene Signalgeber befestigt, beispielsweise eingenäht. Ein erster Geber befindet sich im Bereich des Rückens, ein zweiter Geber im Bereich des Bauches, ein dritter Geber auf der linken Seite und ein vierter Geber auf der rechten Seite. Befinden sich diese Signalgeber in der Nähe eines der Lagesensoren 10, dann gibt der jeweilige Lagesensor ein jeweils charakteristisches Kennsignal an die Steuereinheit 4 ab, anhand dessen die Steuereinheit unter Verwendung von in einem Liegeprofilspeicher abgespeicherten Daten erkennt, ob die auf der Matratze liegende Person auf dem Bauch, auf dem Rücken, der linken Seite oder der rechten Seite liegt. Liegt die Person beispielsweise auf dem Rücken, dann verursacht lediglich der im Bereich des Rückens angeordnete Signalgeber über den in der Nähe angeordneten Lagegeber 10 eine Meldung an die Steuereinheit 4. Alle anderen Signalgeber sind soweit vom jeweils nächstliegenden Lagesensor entfernt, dass die weiteren Lagesensoren kein Signal abgeben. Folglich stellt die Steuereinheit 4 in diesem Fall ein Matratzenprofil ein, das einer auf dem Rücken schlafenden Person entspricht. Dazu verwendet die Steuereinheit 4 Daten, die in einem Matratzenprofilspeicher abgespeichert sind.

Die Figur 3 zeigt eine schematische Ansicht zur Veranschaulichung einer bevorzugten Ausführungsform einer Luftkammer. Diese ist in Form eines Faltenbalges realisiert, der aus einem weichen Kunststoffmaterial besteht. Wird in diese Luftkammer von der Unterseite Luft gepumpt, dann werden die Falten in dem Sinne gestreckt, dass sich die Höhe der Luftkammer vergrößert. Wird hingegen Luft aus der Luftkammer abgelassen, dann sinkt der Faltenbalg wieder zusammen, so dass sich die Höhe der Luftkammer verkleinert. Einander benachbarte Faltenbalge der Matratze 1 sind - wie es durch das in der Figur 3 dargestellte Kontaktstück 2a veranschaulicht ist - durch einen Vulkanisiervorgang miteinander verbunden. Diese Verbindung einander benachbarter Faltenbalge befindet sich im mittleren oder unteren Bereich des jeweiligen Faltenbalges. Dadurch ist die Einstellung der gewünschten Höhe eines Faltenbalges nicht beeinträchtigt. Die in der Luftkammer 2 befindlichen Sensoren sind in der Figur 3 aus Gründen der Übersichtlichkeit nicht dargestellt.

Alternativ zu der in der Figur 3 dargestellten Ausführungsform können die Luftkammern auch in Form einer teleskopierbaren Kolben-Zylinder-Verbindung realisiert sein.

Die Figur 4 zeigt eine weitere Darstellung zur Erläuterung der Funktionsweise einer Liegevorrichtung gemäß der Erfindung. In dieser Figur sind insbesondere die Steuereinheit 4 und die Luftquelle 7 detaillierter gezeigt.

Die Luftquelle 7 weist ein Kolbengehäuse 16 auf, innerhalb dessen ein Kolben 15 auf und ab bewegbar ist. Bei der Aufwärtsbewegung des Kolbens 15 wird Luft in Richtung der Ventile 3 der Luftkammern gepresst. Ist das jeweilige Ventil geöffnet, dann wird die durch das Ventil gepresste Luft in die jeweilige Luftkammer gepumpt. Bei der Abwärtsbewegung des Kolbens kann - sofern das jeweilige Ventil geöffnet ist - Luft aus der jeweils zugehörigen Luftkammer abgelassen werden. Die Bewegung des Kolbens 15 wird durch einen Linearmotor 14 hervorgerufen, der seinerseits mit Steuersignalen beaufschlagt wird, die ihm von der Steuereinheit 11 über eine Motorsteuerleitung 21 zugeführt werden. Die Steuereinheit 11 sorgt dafür, dass ein Ventil zum Einpumpen oder Ablassen von Luft während der Auf- bzw. Abbewegung des Kolbens nur dann geöffnet wird, wenn der Druck in der jeweiligen Luftkammer mit dem in der Pumpenkammer des Kolbengehäuses herrschenden Luftdruck übereinstimmt. Zu diesem Zweck ist auch im Bereich des Kolbengehäuses ein Drucksensor 23 vorgesehen, dessen Ausgangssignal der Steuereinheit 4 über eine Leitung 22 zugeführt wird.

Der Vorteil einer derartigen Ausgestaltung der Luftquelle 7 besteht darin, dass das Einbringen von Luft in die Luftkammern der Matratze und das Auslassen von Luft aus den Luftkammern der Matratze geräuschlos erfolgt. Dies ist darauf zurückzuführen, dass sich der Kolben 15 im Kolbengehäuse 16 nur sehr langsam bewegen muss, da eine Änderung des Luftdrucks in den Luftkammern nicht abrupt erfolgen soll, sondern langsam. Dies hat den Vorteil, dass für die auf der Matratze liegende Person die Änderung des Luftdruckes unauffällig erfolgt.

Die Steuerung der Ventile erfolgt - wie bereits oben ausgeführt wurde - durch Steuersignale, die von der Steuereinheit 4 zur Verfügung gestellt werden - für jedes der Ventile und damit für jede Luftkammer individuell.

Die Steuereinheit 4 weist einen Prozessor 11, einen Matratzenprofilspeicher 12, eine Tastatur 13 als Eingabemittel, einen Protokollspeicher 17 und einen Liegeprofilspeicher 20 auf. Der Prozessor 11 ist mit einem Display 5 sowie über eine Online-Verbindung 18 mit einem entfernt angeordneten Zentralprozessor 19 verbunden. Letzterer befindet sich beispielsweise in einem Krankenhaus, in einer Arztpraxis oder in einer Schlafforschungsanstalt. Weiterhin ist der Prozessor 11 über die Motorsteuerleitung 21 mit dem Linearmotor 14 verbunden. Ferner werden ihm - was in der Figur 4 nicht dargestellt, jedoch aus der Figur 2 ersichtlich ist - die von den Drucksensoren 8, den Höhensensoren 9 und den Lagesensoren 10 abgeleiteten Sensorsignale zur Verfügung gestellt.

Die dargestellte Vorrichtung weist mehrere Arbeitsmodi auf, die über die Tastatur 13 einleitbar sind.

Ein erster Arbeitsmodus besteht darin, mittels der Bedientastatur 13 ein gewünschtes Matratzenprofil auszuwählen und mittels des Prozessors 11 einzustellen. Zu diesem Zweck wurde im voraus im Matratzenprofilspeicher 12 Daten hinterlegt, die einer Vielzahl von verschiedenen Matratzenprofilen entsprechen. Jeder dieser Datensätze ist über die Bedientasten 13 im Sinne einer Auswahl eines gewünschten Matratzenprofils auswählbar. Der Prozessor 11 adressiert als Reaktion auf die eingegebenen Bedienbefehle den Matratzenprofilspeicher 12 derart, dass der jeweils gewünschte Datensatz aus dem Matratzenprofilspeicher 12 ausgelesen wird und steuert den Linearmotor 14 und die Ventile der Luftkammern derart, dass das gewünschte Matratzenprofil eingestellt wird. Jeder der genannten Datensätze enthält dabei bezüglich jeder einzelnen der Luftkammern Informationen über den Druck und die Höhe.

Ist das gewünschte Matratzenprofil eingestellt, dann überwacht der Prozessor 11 die Aufrechterhaltung dieser Einstellung unter Berücksichtigung der ihm zugeführten Eingangssignale und leitet bei Bedarf Anpassungen durch eine geeignete Ansteuerung des Linearmotors 14 und der Ventile 3 der Luftkammern in die Wege. Weiterhin überwacht der Prozessor 11 den Druck in jeder einzelnen Luftkammer dahingehend, dass ein zulässiger, im voraus festgelegter Maximaldruck nicht überschritten wird. Erkennt der Prozessor 11, dass der Luftdruck in einer der Kammern mit dem zulässigen Maximaldruck übereinstimmt, dann öffnet er das zugehörige Ventil, um Luft aus dieser Kammer abzulassen.

Um zu verhindern, dass dann, wenn die auf der Matratze liegende Person aufsteht, die Luftkammern komplett entspannen, kann in jeder Luftkammer ein Begrenzungselement vorgesehen sein. Dieses Begrenzungselement bewirkt, dass eine vorgegebene zulässige Maximalhöhe der Luftkammern nicht überschritten wird. Dadurch werden Beschädigungen oder gar Zerstörungen der Luftkammern vermieden. Sind die Luftkammern als Faltenbalge realisiert, kann das Begrenzungselement beispielsweise eine Leine sein.

Vorzugsweise wird im unbelasteten Zustand der Matratze ein Vordruck auf jede Luftkammer gegeben. Eine Einregelung auf ein gewünschtes Matratzenprofil erfolgt erst dann, wenn wieder eine Person auf der Matratze liegt.

Ein zweiter Arbeitsmodus besteht darin, mittels der Bedientastatur den Ablauf einer vorgegebenen Abfolge von Matratzenprofilen in die Wege zu leiten. Diese Abfolge von Matratzenprofilen wurde im voraus festgelegt und dient einer wiederholten Umlagerung der auf der Matratze liegenden Person. Dadurch kann erreicht werden, dass die Wirbelsäule der auf der Matratze liegenden Person beispielsweise während des Schlafes in vorgegebener Weise bewegt wird, so dass die genannte Person nach dem Aufwachen keine Rückenschmerzen hat. Bei kranken Patienten, die sich selbst kaum mehr bewegen können, kann durch die wiederholte Veränderung des Matratzenprofils erreicht werden, dass der Druck auf bestimmte Körperteile, beispielsweise die Fersen oder Schultern, nicht über einen langen Zeitraum konstant hoch bleibt. Dadurch kann ein Auftreten von Dekubitus vermieden oder zumindest verzögert werden. Auch in diesem Arbeitsmodus werden die dem Prozessor 11 von den Sensoren zugeführten Eingangssignale zusätzlich berücksichtigt, um das jeweils gewünschte Matratzenprofil aufrechtzuerhalten und an den Körper der auf der Matratze liegenden Person anzupassen.

Ein dritter Arbeitsmodus besteht darin, durch eine Auswertung der Liegeposition der auf der Matratze liegenden Person automatisch ein Matratzenprofil einzustellen, dass der detektierten Liegeposition angepasst ist. Zu diesem Zweck wurden im voraus im Liegeprofilspeicher 12 Daten abgespeichert, die Matratzenprofilen entsprechen, die an die jeweilige Liegeposition angepasst sind. Eine mögliche Liegeposition ist die Bauchlage, eine zweite Liegeposition ist die Rückenlage, eine dritte Liegeposition ist ein Liegen auf der linken Körperseite, eine vierte Liegeposition ist ein Liegen auf der rechten Körperseite. Die jeweils zugehörigen Matratzenprofile sind derart, dass die auf der Matratze liegende Person jeweils bequem und wirbelsäulenfreundlich gelagert ist.

Die Detektion der Liegeposition erfolgt durch eine Auswertung der Ausgangssignale der Lagesensoren 10. Diese wirken mit Signalgebern zusammen, die in der Schlafanzughose der auf der Matratze liegenden Person befestigt, beispielsweise eingenäht, sind. So ist im Rückenbereich, im Bauchbereich, auf der linken Seite und auf der rechte Seite der Schlafanzughose jeweils ein derartiger Signalgeber vorgesehen, wobei diese Signalgeber voneinander unterscheidbare Signale abgeben. Diese werden, wenn sich der jeweilige Signalgeber nahe genug bei einem der Lagesensoren 10 befindet, von diesem detektiert und an die Steuereinheit 4 weitergeleitet. Liegt die auf der Matratze liegende Person beispielsweise auf dem Rücken, dann ist ausschließlich der im Rückenbereich der Schlafanzughose positionierte Lagesensor 10 nahe genug am Signalgeber, so dass lediglich dieser Lagesensor ein Signal an die Steuereinheit 4 weiterleitet. Diese adressiert als Reaktion auf den Empfang dieses Signals den Liegeprofilspeicher 20 derart, dass von dort diejenigen Daten ausgelesen werden, die der detektierten Liegeposition entsprechen. Diese Daten werden von der Steuereinheit 4 verwendet, um geeignete Ansteuersignale für den Linearmotor 14 und die Ventile der Luftkammern 2 zur Verfügung zu stellen. Der Liegeprofilspeicher 20 und der Matratzenprofilspeicher 12 können ggf. als ein einziger Speicher realisiert sein.

Die vorstehend genannten Betriebsarten können auch miteinander kombiniert werden, wodurch die Anpassung des Matratzenprofils an den Körper der auf der Matratze liegenden Person weiter verbessert wird.

Eine vorteilhafte Ausgestaltung der Erfindung besteht darin, die den Matratzenprofilen entsprechenden Daten in geeigneter Form auf dem Display 5 darzustellen. Der Benutzer hat dann die Möglichkeit, anhand der Displaydarstellung gezielt Veränderungen an den Matratzenprofilen vorzunehmen, die seinen individuellen Vorstellungen entsprechen. Dazu gehört beispielsweise auch eine Massage und eine Belüftung durch ein gezieltes Auf- und Abbewegen einzelner Kammern.

Eine andere vorteilhafte Ausgestaltung der Erfindung besteht darin, einen Protokollspeicher 17 vorzusehen, in welchem beispielsweise für die Dauer einer Nacht die eingestellten Matratzenprofile protokolliert werden. Die protokollierten Daten können im Nachhinein auf dem Display 5 dargestellt werden. Dies erlaubt Rückschlüsse darauf, ob der Schlafende überwiegend auf dem Bauch, dem Rücken oder der Seite schläft, ob er sich häufig oder eher selten im Schlaf dreht, usw..

Die Auswertung der protokollierten Daten kann alternativ auch mittels eines entfernt angeordneten Zentralrechners 19 erfolgen, der mit der Steuereinheit 4 über eine Online-Verbindung 18 gekoppelt ist. Dieser Zentralrechner steht beispielsweise in einem Krankenhaus. Dadurch wird es einem Arzt ermöglicht, die Schlafgewohnheiten eines seiner Patienten zu analysieren und bei Bedarf auch gezielt eingestellte Matratzenprofile aus der Ferne zu verändern, indem er neue, geänderten Matratzenprofilen entsprechende Daten über die Online-Verbindung 18 an die Steuereinheit 4 überträgt.

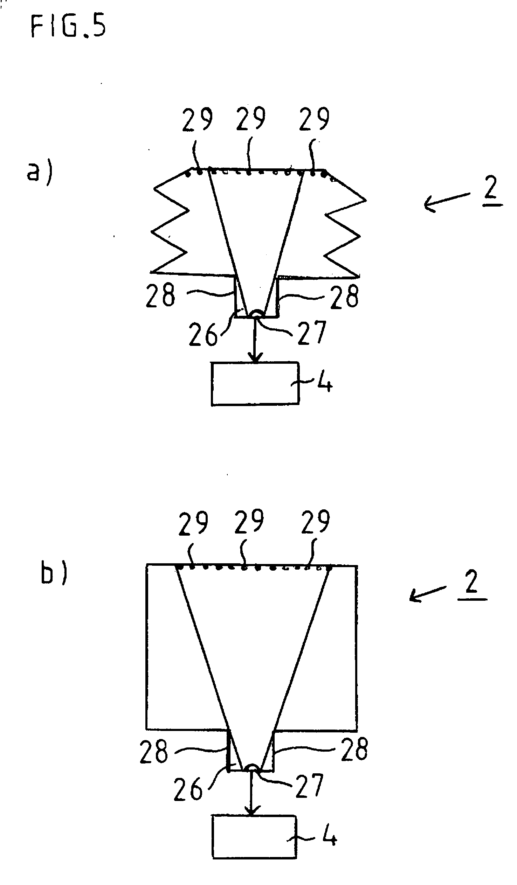

Die Figur 5 zeigt Skizzen eines Ausführungsbeispiels zur Messung der Höhe einer Luftkammer, bei welchem der Höhensensor ein Bildaufnahmeelement aufweist. Gemäß diesem Ausführungsbeispiel ist der Boden der Luftkammer 2 mit einer Vertiefung 26 versehen, in deren unterem Bereich das Bildaufnahmeelement 27 angeordnet ist. Dieses Bildaufnahmeelement 27 ist nach oben in Richtung der Oberseite der Luftkammer gerichtet. Der Aufnahmebereich des Bildaufnahmeelements 27 ist durch die Seitenwände 28 der Vertiefung 26 seitlich begrenzt. An der Innenfläche der Oberseite der Luftkammer ist eine Vielzahl von Markierungspunkten 29 vorgesehen. Ist die Luftkammer mit nur wenig Luft gefüllt, dann ist die Höhe der Luftkammer gering, und es ist im Aufnahmebereich des Bildaufnahmeelementes 27 nur eine von der Höhe der Luftkammer abhängige, vergleichsweise geringe Anzahl der Markierungspunkte 29 enthalten. Dieser Zustand ist in der Figur 5a veranschaulicht. Ist hingegen die Luftkammer vollständig mit Luft gefüllt, dann ist die Höhe der Luftkammer groß und es sind im Aufnahmebereich des Bildaufnahmeelements alle Markierungspunkte enthalten. Dieser Zustand ist in der Figur 5b veranschaulicht. Das Ausgangssignal des Bildaufnahmeelementes 27 wird an die Steuereinheit 4 übertragen. Diese ermittelt aus dem empfangenen Signal die jeweils vorliegende Anzahl der erfassten Markierungspunkte 29 und daraus dann die Höhe der Luftkammer.

### Bezugszeichenliste:

- 1: Matratze
- 2: Luftkammer
- 2a: Kontaktstück einer Luftkammer
- 3: Ventil
- 4: Steuereinheit
- 5: Display
- 6: Luftanschluss
- 7: Luftquelle
- 8: Drucksensor
- 9: Höhensensor
- 10: Lagesensorik, Lagesensor
- 11: Prozessor
- 12: Matratzenprofilspeicher
- 13: Eingabemittel; Tastatur
- 14: Linearmotor
- 15: Kolben
- 16: Kolbengehäuse
- 17: Protokollspeicher
- 18: Online-Verbindung
- 19: Zentralrechner
- 20: Liegeprofilspeicher
- 21: Motorsteuerleitung
- 22: Leitung zur Steuereinheit
- 23: Drucksensor
- 24: elektrisches Sicherheitsventil
- 25: mechanisches Überdruckventil
- 26: Vertiefung
- 27: Bildaufnahmeelement
- 28: Seitenwände
- 29: Markierungspunkte

## Patentansprüche

1. Liegevorrichtung, mit
- einer Matratze (1) mit einer Vielzahl von gitterförmig angeordneten Luftkammern (2), die jeweils mindestens einen Luftanschluss (6) aufweisen,
- einer Vielzahl von steuerbaren Ventilen (3), wobei jedes Ventil einer der Luftkammern zugeordnet ist,
- einer Vielzahl von Sensoren,
- einer mit den Sensoren verbundenen Steuereinheit (4), die die Ventile (3) in Abhängigkeit von den Ausgangssignalen der Sensoren individuell steuert, und
- einer mit den Ventilen verbundenen Luftquelle (7),
**dadurch gekennzeichnet, dass**
- die Luftquelle (7) einen von einem Linearmotor (14) angetriebenen Kolben (15) aufweist, der in einem Kolbengehäuse (16) auf und ab bewegbar ist.

2. Liegevorrichtung nach Anspruch 1, **dadurch gekennzeichnet, dass** jeder Luftkammer (2) ein Drucksensor (8) zur Erfassung des in der Luftkammer herrschenden Luftdruckes zugeordnet ist und die Drucksensoren jeweils mit der Steuereinheit (4) verbunden sind.

3. Liegevorrichtung nach Anspruch 1 oder 2, **dadurch gekennzeichnet, dass** jeder Luftkammer ein Höhensensor (9) zur Erfassung der Höhe der Luftkammer zugeordnet ist und die Höhensensoren jeweils mit der Steuereinheit (4) verbunden sind.

4. Liegevorrichtung nach einem der vorhergehenden Ansprüche, **dadurch gekennzeichnet, dass** die Matratze eine Lagesensorik (10) enthält, die zur Detektion der Liegeposition einer auf der Matratze liegenden Person vorgesehen ist, und dass die Lagesensorik mit der Steuereinheit (4) verbunden ist.

5. Liegevorrichtung nah Anspruch 4, **dadurch gekennzeichnet, dass** mindestens eine der Luftkammern der Matratze einen Lagesensor (10) aufweist.

6. Liegevorrichtung nach einem der vorhergehenden Ansprüche, **dadurch gekennzeichnet, dass** die Steuereinheit (4) einen Prozessor (11) aufweist, der Steuersignale für die Ventile in Abhängigkeit von den gelieferten Sensorsignalen zur Verfügung stellt.

7. Liegevorrichtung nach Anspruch 6, **dadurch gekennzeichnet, dass** der Prozessor (11) durch eine Auswertung der von den Lagesensoren (10) gelieferten Signale die Liegeposition einer auf der Matratze liegenden Person erkennt, Daten, die einem der Liegeposition zugehörigen Matratzenprofil entsprechen, aus dem Liegeprofilspeicher (20) abruft und die ausgelesenen Daten in Steuersignale für die Ventile umsetzt.

8. Liegevorrichtung nach einem der vorhergehenden Ansprüche, **dadurch gekennzeichnet, dass** die Steuereinheit einen Prozessor (11) aufweist, der mit einem Matratzenprofilspeicher (12) verbunden ist, dass im Matratzenprofilspeicher (12) Matratzenprofilen entsprechende Daten abgespeichert sind, und dass der Prozessor die einem Matratzenprofil entsprechenden Daten aus dem Matratzenprofilspeicher (12) abruft und in Steuersignale für die Ventile umsetzt.

9. Liegevorrichtung nach einem der vorhergehenden Ansprüche, **dadurch gekennzeichnet, dass** sie Eingabemittel (13) zur Eingabe von Bedienbefehlen aufweist.

10. Liegevorrichtung nach Anspruch 9, **dadurch gekennzeichnet, dass** die Eingabemittel (13) zur Eingabe eines Bedienbefehls vorgesehen sind, aufgrund dessen eines der Matratzenprofile ausgewählt wird.

11. Liegevorrichtung nach Anspruch 9 oder 10, **dadurch gekennzeichnet , dass** die Eingabemittel (13) zur Eingabe eines Startbefehls vorgesehen sind, aufgrund dessen die Steuereinheit Steuersignale für die Ventile erzeugt, die die Einstellung einer vorgegebenen Abfolge von Matratzenprofilen bewirken.

12. Liegevorrichtung nach einem der vorhergehenden Ansprüche, **dadurch gekennzeichnet, dass** die Luftkammern (2) jeweils in Form eines Faltenbalges (Figur 3) oder in Form einer teleskopierbaren Kolben-ZylinderEinheit realisiert sind.

13. Liegevorrichtung nach einem der vorhergehenden Ansprüche, **dadurch gekennzeichnet, dass** die Luftkammern jeweils ein Begrenzungselement aufweisen, das die Maximalhöhe der Luftkammer begrenzt.

14. Liegevorrichtung nach einem der Ansprüche 6 - 13, **dadurch gekennzeichnet, dass** der Prozessor (11) mit einem Display (5) verbunden ist und das Display zur Veranschaulichung von Matratzenprofilen dient.

15. Liegevorrichtung nach einem der vorhergehenden Ansprüche, **dadurch gekennzeichnet, dass** sie einen Protokollspeicher (17) aufweist, der zur Abspeicherung von Daten vorgesehen ist, die eingestellten Matratzenprofilen entsprechen.

16. Liegevorrichtung nach Anspruch 15, **dadurch gekennzeichnet, dass** die den eingestellten Matratzenprofilen entsprechenden Daten aus dem Protokollspeicher (17) ausgelesen und auf dem Display (5) dargestellt und/oder einer Auswertung durch den Prozessor (11) zugeführt werden.

17. Liegevorrichtung nach einem der Ansprüche 6 - 16 , **dadurch gekennzeichnet, dass** der Prozessor (11) über eine Online-Verbindung (18) mit einem Zentralrechner (19) verbunden ist.

18. Liegevorrichtung nach Anspruch 17, **dadurch gekennzeichnet, dass** die den eingestellten Matratzenprofilen entsprechenden Daten aus dem Protokollspeicher (17) ausgelesen und über die Online-Verbindung (18) an den Zentralrechner (19) weitergeleitet werden.

19. Liegevorrichtung nach Anspruch 17 oder 18, **dadurch gekennzeichnet, dass** der Zentralrechner (19) über die Online-Verbindung (18) Matratzenprofilen entsprechende Daten an die Steuereinheit (4) überträgt.

## Claims

1. Lying-down device, comprising
- a mattress (1) with a plurality of air chambers (2), which are arranged in grid shape and which each have at least one air connection (6),
- a plurality of controllable valves (3), wherein each valve is associated with one of the air chambers,
- a plurality of sensors,
- a control unit (4), which is connected with the sensors and which individually controls the valves (3) in dependence on the output signals of the sensors and
- an air source (7) connected with the valves,
**characterised in that**
- the air source (7) comprises a piston (15) which is driven by a linear motor (14) and which is reciprocatingly movable in a piston housing (16).

2. Lying-down device according to claim 1, **characterised in that** a pressure sensor (8) for detection of the air pressure prevailing in the air chamber is associated with each air chamber (2) and the pressure sensors are respectively connected with the control unit (4).

3. Lying-down device according to claim 1 or 2, **characterised in that** a height sensor (9) for detection of the height of the air chamber is associated with each air chamber and the height sensors are respectively connected with the control unit (4).

4. Lying-down device according to any one of the preceding claims, **characterised in that** the mattress includes a position sensor system (10) provided for detection of the lying position of a person lying on the mattress and that the position sensor system is connected with the control unit (4).

5. Lying-down device according to claim 4, **characterised in that** at least one of the air chambers of the mattress has a position sensor (10).

6. Lying-down device according to any one of the preceding claims, **characterised in that** the control unit (4) comprises a processor (11) which makes available control signals for the valves in dependence on the supplied sensor signals.

7. Lying-down device according to claim 6, **characterised in that** the processor (11) recognises by an evaluation of the signals supplied by the position sensors (10) the lying position of a person lying on the mattress, calls up data, which correspond with the mattress profile associated with the lying position, from the lying profile memory (20) and converts the read-out data into control signals for the valves.

8. Lying-down device according to any one of the preceding claims, **characterised in that** the control unit comprises a processor (11) connected with a mattress profile memory (12), that data corresponding with mattress profiles are stored in the mattress profile memory (12) and that the processor calls up the data, which correspond with a mattress profile, from the mattress profile memory (12) and converts them into control signals for the valves.

9. Lying-down device according to any one of the preceding claims, **characterised in that** it comprises input means (13) for input of control commands.

10. Lying-down device according to claim 9, **characterised in that** the input means (13) are provided for input of a control command, on the basis of which one of the mattress profiles is selected.

11. Lying-down device according to claim 9 or 10, **characterised in that** the input means (13) are provided for input of a start command, on the basis of which the control unit generates, for the valves, control signals which cause setting of a predetermined sequence of mattress profiles.

12. Lying-down device according to any one of the preceding claims, **characterised in that** the air chambers (2) are respectively realised in the form of a bellows (Figure 3) or in the form of a telescopic piston-cylinder unit.

13. Lying-down device according to any one of the preceding claims, **characterised in that** the air chambers each have a limiting element which limits the maximum height of the air chamber.

14. Lying-down device according to any one of claims 6 to 13, **characterised in that** the processor (11) is connected with a display (5) and the display serves for illustration of mattress profiles.

15. Lying-down device according to any one of the preceding claims, **characterised in that** it comprises a protocol memory (17) provided for storage of data corresponding with set mattress profiles.

16. Lying-down device according to claim 15, **characterised in that** the data corresponding with the set mattress profiles are read out of the protocol memory (17) and illustrated on the display (5) and/or are supplied for an evaluation by the processor (11).

17. Lying-down device according to any one of claims 6 to 16, **characterised in that** the processor (11) is connected with a central computer (19) by way of an on-line connection (18).

18. Lying-down device according to claim 17, **characterised in that** the data corresponding with the set mattress profiles are read out of the protocol memory (17) and passed on by way of the on-line connection (18) to the central computer (19).

19. Lying-down device according to claim 17 or 18, **characterised in that** the central computer (19) transmits data corresponding with mattress profiles to the control unit (4) by way of the on-line connection (18).

## Revendications

1. Dispositif de couchage comprenant
- un matelas (1) avec une pluralité de chambres à air (2) disposées en treillis qui présentent chacune au moins une prise d'air (6),
- une pluralité de valves (3) pouvant être commandées, chaque valve étant associée à l'une des chambres à air,
- une pluralité de capteurs,
- une unité de commande (4) reliée aux capteurs, qui commande individuellement les valves (3) en fonction des signaux de sortie des capteurs, et
- une source d'air (7) reliée aux valves,
**caractérisé en ce que**
- la source d'air (7) présente un piston (15) entraîné par un moteur linéaire (14), qui peut être déplacé vers le haut et le bas dans un cylindre (16).

2. Dispositif de couchage selon la revendication 1, **caractérisé en ce qu'**à chaque chambre à air (2) est associé un capteur de pression (8) servant à détecter la pression d'air régnant dans la chambre à air et **en ce que** les capteurs de pression sont reliés respectivement à l'unité de commande (4).

3. Dispositif de couchage selon la revendication 1 ou 2, **caractérisé en ce qu'**à chaque chambre à air est associé un capteur de hauteur (9) servant à détecter la hauteur de la chambre à air et **en ce que** les capteurs de hauteur sont reliés respectivement à l'unité de commande (4).

4. Dispositif de couchage selon l'une quelconque des revendications précédentes, **caractérisé en ce que** le matelas contient un système de capteur de position (10) qui est prévu pour la détection de la position de couchage d'une personne couchée sur le matelas, et **en ce que** le système de capteur de position est relié à l'unité de commande (4).

5. Dispositif de couchage selon la revendication 4, **caractérisé en ce qu'**au moins l'une des chambres à air du matelas présente un capteur de position (10).

6. Dispositif de couchage selon l'une quelconque des revendications précédentes, **caractérisé en ce que** l'unité de commande (4) présente un processeur (11) qui met à disposition des signaux de commande pour les valves en fonction des signaux de capteur fournis.

7. Dispositif de couchage selon la revendication 6, **caractérisé en ce que** le processeur (11) détecte par une évaluation des signaux fournis par les capteurs de position (10) la position de couchage d'une personne couchée sur le matelas, appelle des données qui correspondent à un profilé de matelas afférent à la position de couchage, à partir de la mémoire de profilé de couchage (20) et convertit les données lues en signaux de commande pour les valves.

8. Dispositif de couchage selon l'une quelconque des revendications précédentes, **caractérisé en ce que** l'unité de commande (4) présente un processeur (11) qui est relié à une mémoire de profilé de matelas (12), **en ce que** des données correspondant aux profilés de matelas sont enregistrées dans la mémoire de profilé de matelas (12), et **en ce que** le processeur appelle les données correspondant à un profilé de matelas à partir de la mémoire de profilé de matelas (12) et les convertit en signaux de commande pour les valves.

9. Dispositif de couchage selon l'une quelconque des revendications précédentes, **caractérisé en ce qu'**il présente des moyens d'entrée (13) servant à entrer des ordres.

10. Dispositif de couchage selon la revendication 9, **caractérisé en ce que** les moyens d'entrée (13) sont prévus pour entrer un ordre, en raison duquel l'un des profilés de matelas est sélectionné.

11. Dispositif de couchage selon la revendication 9 ou 10, **caractérisé en ce que** les moyens d'entrée (13) sont prévus pour entrer un ordre de démarrage, en raison duquel l'unité de commande génère des signaux de commande pour les valves qui provoquent le réglage d'une suite prescrite de profilés de matelas.

12. Dispositif de couchage selon l'une quelconque des revendications précédentes, **caractérisé en ce que** les chambres à air (2) sont réalisées chacune sous la forme d'un soufflet (figure 3) ou sous la forme d'une unité à piston et à cylindre télescopique.

13. Dispositif de couchage selon l'une quelconque des revendications précédentes, **caractérisé en ce que** les chambres à air présentent chacune un élément de limitation qui limite la hauteur maximale de la chambre à air.

14. Dispositif de couchage selon l'une quelconque des revendications 6 à 13, **caractérisé en ce que** le processeur (11) est relié à un écran (5) et **en ce que** l'écran sert à illustrer les profilés de matelas.

15. Dispositif de couchage selon l'une quelconque des revendications précédentes, **caractérisé en ce qu'**il présente une mémoire de protocoles (17) qui est prévue pour mémoriser les données qui correspondent aux profilés de matelas réglés.

16. Dispositif de couchage selon la revendication 15, **caractérisé en ce que** les données correspondant aux profilés de matelas réglés sont lues à partir de la mémoire de protocoles (17) et sont représentées sur l'écran (5) et/ou sont amenées à une évaluation par le processeur (11).

17. Dispositif de couchage selon l'une quelconque des revendications 6 à 16, **caractérisé en ce que** le processeur (11) est relié à un ordinateur central (19) par une liaison en ligne (18).

18. Dispositif de couchage selon la revendication 17, **caractérisé en ce que** les données correspondant aux profilés de matelas réglés sont lues à partir de la mémoire de protocoles (17) et sont transmises à l'ordinateur central (19) par la liaison en ligne (18).

19. Dispositif de couchage selon la revendication 17 ou 18, **caractérisé en ce que** l'ordinateur central (19) transfère des données correspondant aux profilés de matelas à l'unité de commande (4) par la liaison en ligne (18).
